# EUROPEAN PATENT SPECIFICATION

(11) **EP 0 894 420 B1**
(45) Date of publication and mention of the grant of the patent: **14.01.2004**
(21) Application number: 97914039.9
(22) Date of filing: 09.04.1997
(51) Int. Cl.: H05B 37/02

(54) **A DEVICE FOR WIRELESS SWITCHING OF ILLUMINATION BODIES**
GERÄT ZUM DRAHTLOSEN SCHALTEN VON LEUCHTKÖRPERN
SYSTEME DE COMMANDE PAR RADIO D'ELEMENTS ECLAIRANTS

(30) Priority: 17.04.1996 CZ 111296
(43) Date of publication of application: 03.02.1999
(73) Proprietor: Vlcek, Miroslav, PhDr., 602 00 Brno (CZ)
(72) Inventor: Vlcek, Miroslav, PhDr., 60200 Brno (CZ); Gill, Radomir, Ing., 62500 Brno (CZ)
(74) Representative: Kador & Partner
(86) International application number: PCT/CZ1997/000014
(87) International publication number: WO 1997/039604

(56) References cited:
- EP-A- 0 153 467
- DE-U- 7 805 339

## Description

### Technical Field

The invention relates to a device for wireless switching of illumination bodies, above all in flats and other enclosed rooms.

### Background Art of the Invention

Electrical illumination bodies in flats and in rooms inside buildings are mostly controlled by push-button switches. roughly called "switches". incorporated in the circuits of the leads installed to individual illumination devices. independently on the particular kind and design of the latter. Under the existing background art the illumination body switches, generally of push-button or sensor concept, are situated directly on the room walls in a close proximity of the door, thus within the reach of the entering person. For the illumination of pass-through rooms having several entrance doors, the problem how to switch the respective illumination body circuit as required in the room without the user being compelled to return to the same switch of his original entrance door. has already been solved in the world long ago. A currently used solution is so-called cross-coupling of illumination body conductors, serving for inverting the current direction in the circuit without an OFF condition. The user simply switches ON and OFF the illumination of a room by a switch situated near any of several entrances, which can, however, be up to three only under the existing solutions. A constant and general limitation of the described installation is a practically variable position of push-button switches near the door, so that, above all in darkness, the entering person is obliged to grope with his hand on the wall for the switch to be found. This is very inconvenient and impractical especially in the rooms unknown yet to the entering person. There exist, no doubt, such illumination switches, which are fitted with glow-lamps, having a negligible power intake and signalling without interruption the switch position. This kind of switches with a constant light acts rather disturbing in a private residential room and is therefore mostly used in public or common corridors and staircases. In addition to the mentioned inconvenience there exists still another limitation of these switches, also in the case of their cross-coupling, viz, they can only be used in the rooms in the walls of which such leads have already been installed. If, however, an alternative or cumulative switching of more illumination devices such as e.g. large chandeliers and lustres is required, additional parallel conductor lines with special switches are necessary. They are used e.g. for amplifying the illumination intensity in rooms. Such installations require mounting a large number of conductors into the walls. Known are, no doubt. also the switches for exceptional illumination bodies conceived on the principle of a pocket-size high-frequency wave generators with a fixed signal transmitted to a high-frequency receiver embodied in the illumination device, e.g. for switching night lamps or emergency illumination bulbs. These are, however, distance switches analogous to the TV controllers etc. whose function cannot be integrated into standard illumination installations of rooms intended for a general use, and that is why they are of an exceptional and individual applicability only.

European Patent Application No. 0 153 467 discloses a door with an incorporated wireless switch controlling a transmitter for transmitting a control signal for switching on and off an illumination in a neighbouring room. The transmitter is arranged inside the handle and a control switch is arranged on the handle, while a battery is lodged in the door, preferably under the door handle cover. A person entering the room pushes the switch when embracing the door handle with a hand.

The disadvantages of this idea consist in that the construction and arranging the apparatus inside of a door handle is very complicated and would be probably expensive. Connecting wires to the stationary battery are in a movable door handle, what could lead to a bigger break-down rate. Another disadvantage is arranging a switch on the handle, what could cause an unintentional switch-on or switch-off when a person entering or leaving the room clasps the handle of the door.

### Disclosure of the invention

The said inconvenience is substantially remedied by a device for a wireless switching of illumination bodies above all in flats and other rooms, the principle whereof is in that at least one door controller and at least one actuator are attached to at least one side of a door body, and in the door controller a high-freuqency modulator with a transmitting antenna is fitted and connected with a code selector, further an actuator switch and a power source. while within the action range of the waves of the high-frequency modulator at least one performance unit is situated, containing a high-frequency demodulator with a receiver antenna connected with an analyzing member and a switching member. the latter being connected with the electric circuit of at least one illumination body.

The device according to the invention enables.on the basis of a corresponding selection of a modulated coded signal, for which also the analyzing member of the high-frequency wave demodulator in the performing unit has been preset, to switch ON and OFF by means of an actuator independently as well as in parallel several illuminating bodies in one or in several rooms. The actuator. which can be handled merely by a tipping with the upside of the fingers of one hand, is placed quite closely to the door lock and no illumination switch has to be blindly groped for in a darkness around the room door. The person intending to enter a room has a possibility of switching on the room illumination in advance and at the same time while opening the door,still before entering the room.

To still improve the device efficiency, it is of advantage to place the door controller together with the actuator on both sides of the door body, preferably below the handle of the door lock. The actuator switch circuit can be combined with a circuit of an arresting member, consisting of a reed relay contact and a permanent magnet. The actuator can be designed as a conventional push-button switch or as a contact sensor with an analogous function.In the analyzing member circuit of the performance unit an ambient illumination pickup can be incorporated, disabling the performance unit if a sufficient daylight intensity is in the room. In the case that also a standard wiring for the illumination body controlled by a conventional push-buton is installed on the wall, it is possible to connect the performance unit instead of the conventional wall push-button, while the electromechanical function of the switch is maintained in combination with the performance unit. Depending on existing specific conditions, the high-frequency modulator mounted in the door controller can be a transmitter of RF, IR or UHF waves.

### Survey of Pictures in the drawings

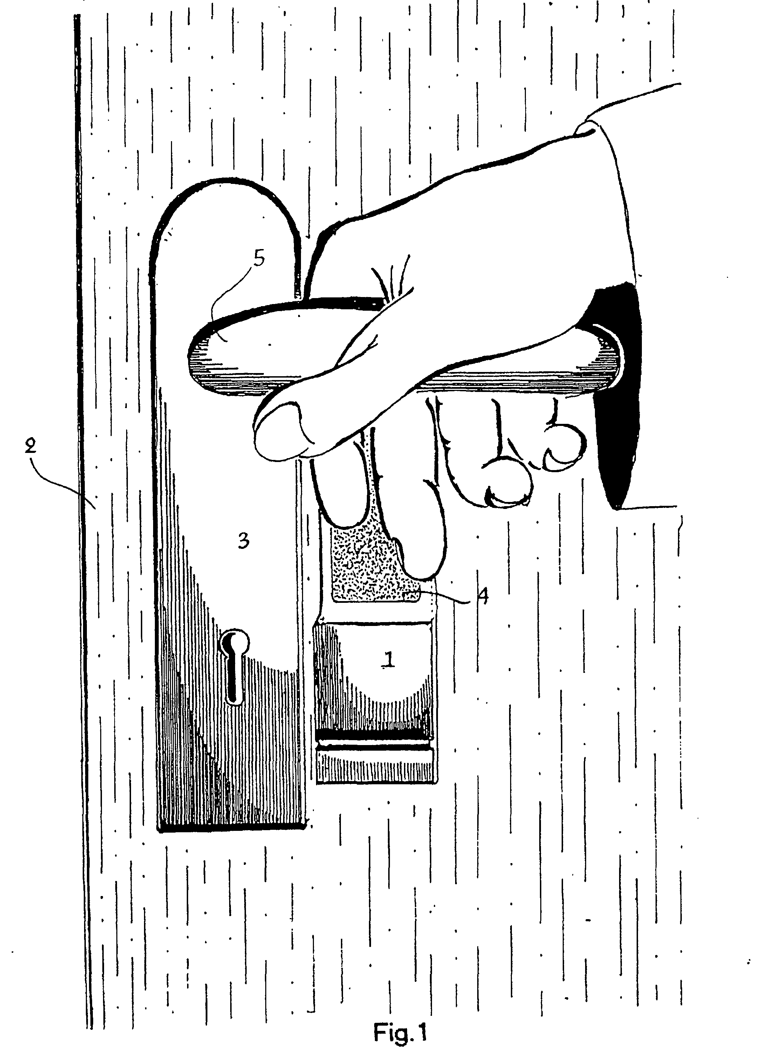

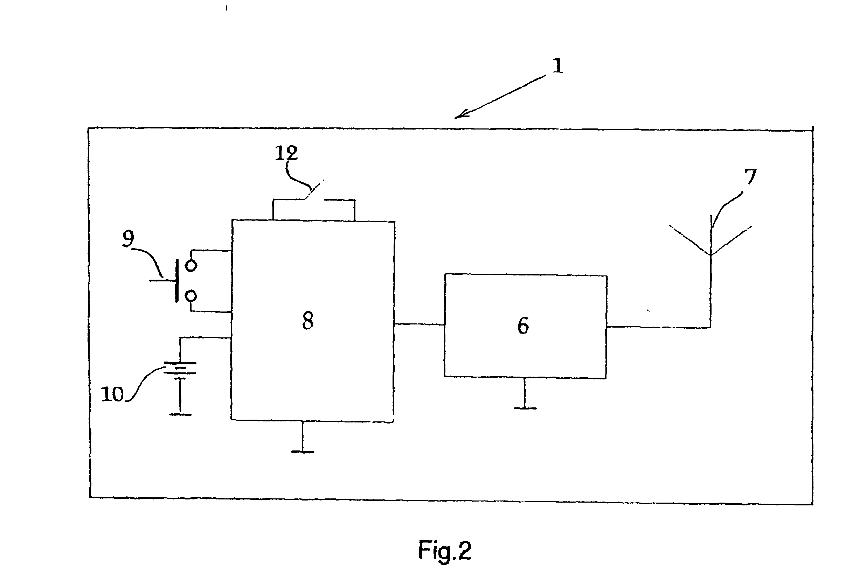

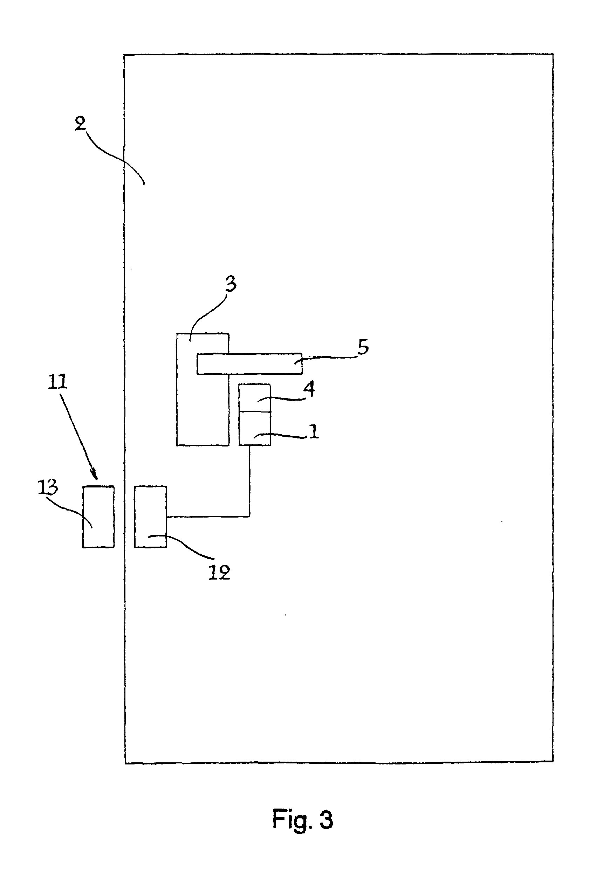

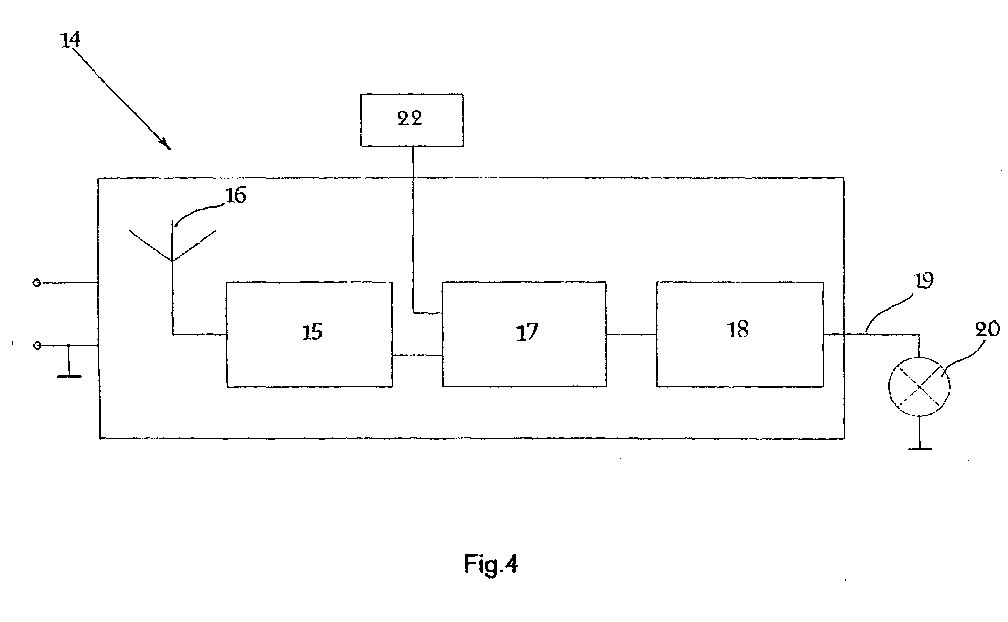

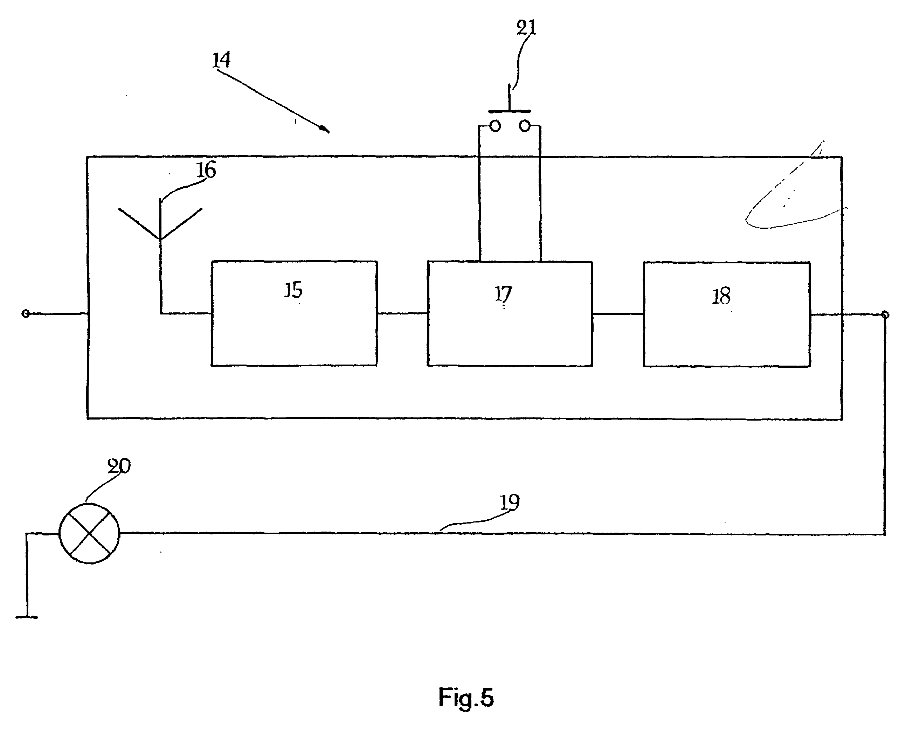

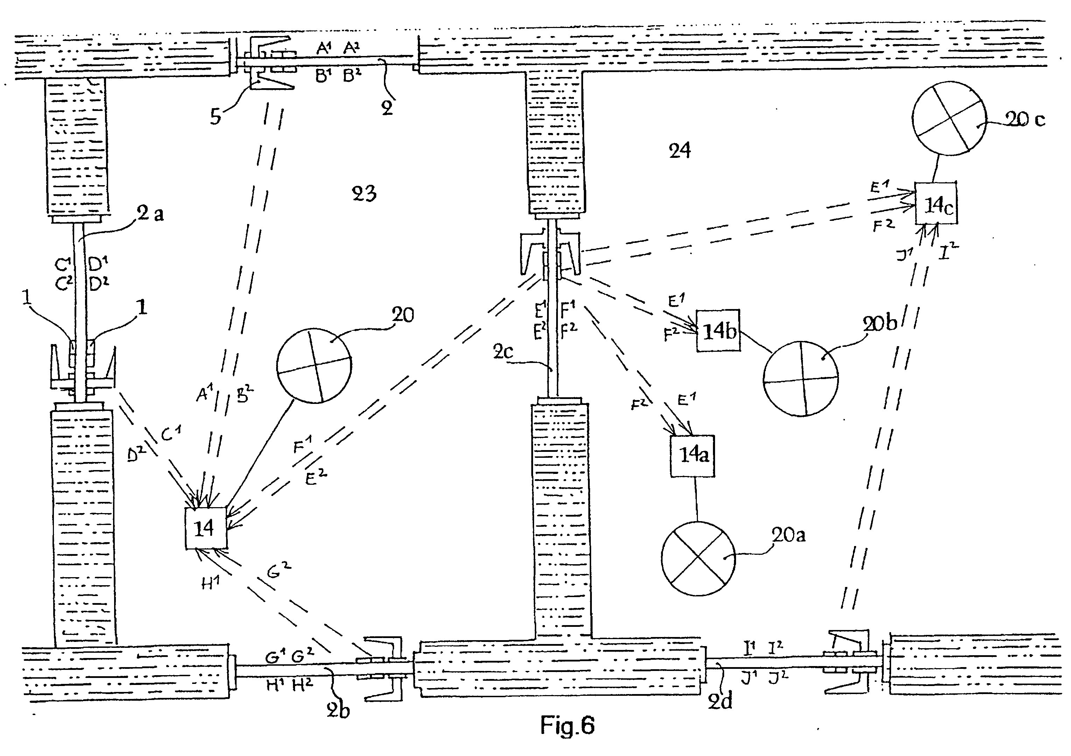

The invention will be nearer explained by means of the drawings among which Fig. 1 presents the outer view of a door controller with an actuator below the door lock handle with the actuating position of man's hand, Fig. 2 a schematic view of the door controller assembly, Fig. 3 a schematic view of a door body with the door controller and actuator connected with an arresting member, Fig. 4 a schematic view of the performance unit assembly with an ambience illumination sensor. Fig. 5 a schematic view of the assembly from Fig. 4 connected with conventional conductors and with a standard illumination body switch, and Fig. 6 a schematic plane view of an installation of both-sides arrangement of the twin door controller in two connected rooms having several doors.

### Examples of embodiment of the invention

The device according to Fig. 1 consists of a door controller 1, mounted on the door body 2 close to the door lock 3. To the upper part of the door control 1 an actuator 4 is attached and situated directly below the body of the handle 5 of the door lock 3. The actuator 4 is either a push-button switch of a simple make and design with a return spring (not shown), or a contact sensor of a conventional make, fulfilling an analogous function. According to Fig. 2, the door controller 1 forms an enclosed assembly, containing its substantial parts, being above all a frequency modulator 6 of an electronic type, fitted with a transmitter antenna 7 and further a code selector 8, whose function is providing for a signal code preset earlier. The high-frequency modulator 6 is substantially a wave transmitter with a local range. To the code selector 8 a switch 9 of the actuator 4 is connected, performing an analogouos function as if a conventional push-button switch or a contact sensor is used (not shown) as current components. To the code selector 8 a power source 10 is further connected, represented in the demonstration case by an electrochemical battery, feeding power for the whole door controller 1. According to Fig. 3 the circuit of the actuator 4 is connected with an arresting member 11, consisting of a contact 12 of a reed-type relay, situated in the door body 2, and of a permanent magnet 13, situated in an opposite position outside of the door body 2. The function of the arresting member 11 as a whole is to disable the circuit of the actuator 4 when the door 2 is closed. This prevents any activating of the door controller 1 by an unwanted person from outside even if the door 2 is closed. The arresting member 11 can be of any other design e.g. having a direct connection (not shown) with the mechanism of the door lock 3. According to Fig. 4 still another substantial part of the device according to the invention is a performance unit 14, situated at any position in the room to be illuminated, but anyway, within the wave range of the high-frequency modulator 6, situated in the door controller 1. Said performance unit 14 consists of a high-frequency demodulator 15, representing together with the receiver antenna 16 roughly a high-frequency wave receiver.Another substantial part of the performance unit 14 is an analyzing member 17, serving for decoding of the signals from the high-frequency modulator 6, and whose function is transforming the code signal in an electric pulse for the switching member 18. The latter forms the last part of the performance unit 14 and its output is connected with a conductor 19 of an illumination body 20, into which it switches the feeding current by means of a triac member having a function of a two-way triode thyristor or of any other commutating element known in the electric technology. According to Fig. 5 the performance unit 14 is connected into a circuit of a conventional line 19 to the illumination body 20. The use of a conventional push-button switch 21 situated on the room wall is made possible by its connecting to the analyzing member 17. To the same member also the ambience illumination sensor 22 can be connected, responding to a preset illumination intensity in a given room and leaving the circuit of the analyzing member 17 disconnected and the illuminating body 20 OFF, if the natural illumination of the room is just sufficient.

The function of the device is apparent from Fig. 6. The person entering the room 23 e.g. through the door 2 activates, when opening the door, by the backhand one of the twin actuators 4 tuned up for the signals of a modulated code A1-A2, by the fact of which activation that actuator 4 has been used as the main one, and this signal results in a wave field in the corresponding door controller 1. The said coded signal is received by the receiver antenna 16 of the frequency modulator 15 in the performance unit 14, and it is transmitted to the analyzing member 17, from which the pulse is further transmitted to the switching member 18, which will switch the circuit of the illumination body 20, situated in the room 23. And then, when this person leaves the room through the same door 2, he will use for switching -off the illumination body 20 the same actuator 4 from the twin assembly on the outer side of door 2, thereby defined as a main actuator. The actuator 4 defined as a secondary one, would represent in the given situation one part of the twin actuators for code signals B1 - B2 and the said person in the room 23 would use it alternatively only if he wants to switch the illumination body 20 without leaving the room 23 and without opening the door 2. By such an alternative use of the system the signal field B1 or B2, as may be, is generated, and the analyzing member 17 transmits in the way described above a pulse for the switching member 18 to cut the circuit of the illuminating body 20. The same effect can be obtained also when entering the room 23 through other doors 2a, 2b or 2c, and the other way about, when leaving the room, by means of code signals C1-C2, D1-D2, E1- E2, F1-F2, G1-G2, H1-H2, I1-I2 and J1-J2, which also comprises the entering or leaving through the door 2d into another room 24 with illumination bodies 20a, 20b and 20c, connected to the analyzing units 14a, 14b and 14c. The same is valid also when using the door 2c. Duplicating the door controllers 1 and actuators 4 in twin assemblies is not limiting and even more such door controllers 1 and actuators 4 may be installed on both sides of the doors 2, 2a, 2b, 2c and 2d. It is possible to switch by them even more illuminating bodies fully deliberately even in a larger number of rooms, which depends on a corresponding selection of a code signal. The system can also be used for a timed illumination of the connected rooms by incorporating a timer into the circuit of the analyzing member 17, or into the switching member 18, which is purposeful when only passing through said rooms.

### Industrial applicability

The device according to the invention can be used practically in all enclosed rooms and spaces not only in flats, hotel rooms and hostels, but with the same efficiency also in offices and public buldings, in industrial premises, hospitals aand schools. They can be adapted also for the use on doors fitted with various types of locks including those electronically controlled e.g. by means of code cards or similar elements.

## Claims

1. A device for a wireless switching of illumination bodies, above all in flats and other enclosed rooms, consisting
of a door controller (1) transmitting a control signal containing an actuator (4) arranged in a door (2, 2a, 2b, 2c, 2d) and furnished with a switch (9)
and
of at least one illumination body (20, 20a, 20b, 20c),
whereby the actuator (4) is arranged within reach of a back of at least one finger of a hand clapsing the door handle (5)
**characterized in that**
the door controller (1) contains further a high frequency modulator (6) with a transmitting antenna (7) and a code selector (8) for addressing a chosen illumination body (20, 20a, 20b, 20c), whereby
the switch (9) is coupled in series with an arresting member (11) for blocking of the circuit of the door controller (1) when the door is closed,
and
each illumination body (20, 20a, 20b, 20c) being furnished with a performance unit (14) containing a high frequency demodulator (15) of only decoding the control signal that is designated for the chosen illumination body (20, 20a, 20b, 20c) provided with a receiving antenna (16) and having a switching member (18) being coupled thereto through an analyzing member (17), said switching member (18) being incorporated in the electric circuit of at least one illumination body (20, 20a, 20b, 20c).

2. A device according to claim 1, **characterized in that** the door controller (1) is designed for cooperation with at least two performance units (14).

3. A device acording to claims 1 and 2, **characterized in that** a sensor (22) of an ambient illumination is incorporated in the circuit of the analyzing member (17) of said performance unit (14).

4. A device according to claims 1 to 3, **characterized in that** said analyzing member (17) of said performance unit (14) is coupled to an electric circuit of at least one conventional switch (21).

## Patentansprüche

1. Vorrichtung zum drahtlosen Schalten von Beleuchtungskörpern, vor allem in Wohnungen oder anderen geschlossenen Räumen, die umfaßt:
eine Türsteuereinheit (1), die ein Steuersignal sendet und einen Aktuator (4) enthält, der in einer Tür (2, 2a, 2b, 2c, 2d) angeordnet ist, und mit einem Schalter (9) versehen ist, und
wenigstens einen Beleuchtungskörper (20, 20a, 20b, 20c),
wobei sich der Aktuator (4) innerhalb der Reichweite der Rückseite wenigstens eines Fingers einer den Türgriff (5) ergreifenden Hand befindet,
**dadurch gekennzeichnet, daß**
die Türsteuereinheit (1) ferner einen Hochfrequenzmodulator (6) mit einer Sendeantenne sowie eine Code-Auswahleinrichtung (8) zum Adressieren eines gewählten Beleuchtungskörpers (20, 20a, 20b, 20c) enthält, wobei
der Schalter (9) mit einem Arretierungselement (11), die die Schaltung der Türsteuereinheit (1) bei geschlossener Tür sperrt, in Reihe geschaltet ist, und
jeder Beleuchtungskörper (20, 20a, 20b, 20c) mit einer Ausführungseinheit (14) versehen ist, die einen Hochfrequenzdemodulator (15) enthält, der nur das Steuersignal decodiert, das für den gewählten Beleuchtungskörper (20, 20a, 20b, 20c) bestimmt ist, und mit einer Empfangsantenne (16) versehen ist und ein Schaltelement (18) besitzt, das damit über ein Analyseelement (17) verbunden ist, wobei das Schaltelement (18) in die elektrische Schaltung wenigstens eines Beleuchtungskörpers (20, 20a, 20b, 20c) eingebaut ist.

2. Vorrichtung nach Anspruch 1, **dadurch gekennzeichnet, daß** die Türsteuereinheit (1) für die Zusammenwirkung mit wenigstens zwei Ausführungseinheiten (14) entworfen ist.

3. Vorrichtung nach den Ansprüchen 1 und 2, **dadurch gekennzeichnet, daß** ein Sensor (22) für die umgebende Beleuchtung in die Schaltung des Analyseelements (17) der Ausführungseinheit (14) eingebaut ist.

4. Vorrichtung nach den Ansprüchen 1 bis 3, **dadurch gekennzeichnet, daß** das Analyseelement (17) der Ausführungseinheit (14) mit der elektrischen Schaltung wenigstens eines herkömmlichen Schalters (21) verbunden ist.

## Revendications

1. Dispositif pour la commutation sans fil de corps d'éclairement, en particulier dans des appartements et des pièces protégés, consistant en un dispositif de commande (1) de porte, transmettant un signal de commande, comprenant un actionneur (4) agencé dans une porte (2, 2a, 2b, 2c, 2d) et équipé d'un interrupteur (9) et d'au moins un corps d'éclairement (20, 20a, 20b, 20c), par lequel l'actionneur (4) est agencé à la portée d'une face arrière d'au moins un doigt d'une main agrippant la poignée de porte (5), **caractérisé en ce que** le dispositif de commande (1) de porte comprend en outre un modulateur haute fréquence (6) avec une antenne de transmission (7) et un sélecteur de code (8) pour adresser un corps d'éclairement (20, 20a, 20b, 20c) sélectionné, par lequel l'interrupteur (9) est couplé en série avec un membre d'arrêt (11) pour bloquer le circuit du dispositif de commande de porte (1) quand la porte est fermée, et
chaque corps d'éclairement (20, 20a, 20b, 20c) étant équipé avec une unité de performance (14) comprenant un démodulateur haute fréquence (15) pour uniquement décoder le signal de commande qui est désigné pour le corps d'éclairement (20, 20a, 20b, 20c) sélectionné, équipé avec une antenne de réception (16) et ayant un membre de commutation (18) étant couplé à celui-ci à travers un membre (17) d'analyse, ledit membre de commutation (18) étant compris dans le circuit électrique d'au moins un corps d'éclairement (20, 20a, 20b, 20c).

2. Dispositif selon la revendication 1, **caractérisé en ce que** le dispositif de commande de porte (1) est conçu pour la coopération avec au moins deux unités de performance (14).

3. Dispositif selon les revendications 1 et 2, **caractérisé en ce qu'**un capteur (22) d'éclairement ambiant est incorporé dans le circuit du membre d'analyse (17) de ladite unité de performance (14).

4. Dispositif selon les revendications 1 à 3, **caractérisé en ce que** ledit membre d'analyse (17) de ladite unité de performance (14) est couplé à un circuit électrique d'au moins un interrupteur (21) classique.
